# EUROPÄISCHE PATENTSCHRIFT

(11) **EP 3 672 041 B1**
(45) Veröffentlichungstag und Bekanntmachung des Hinweises auf die Patenterteilung: **15.06.2022**
(21) Anmeldenummer: 19206799.9
(22) Anmeldetag: 04.11.2019
(51) Int. Cl.: H02K 21/24, H02K 1/27

(54) **ELEKTRISCHE SCHEIBENLÄUFERMASCHINE**
ELECTRIC DISK ROTOR MACHINE
MACHINE ÉLECTRIQUE À ROTOR À DISQUE

(30) Priorität: 18.12.2018 DE 102018009959
(43) Veröffentlichungstag der Anmeldung: 24.06.2020
(73) Patentinhaber: eMoSys GmbH, 82319 Starnberg (DE)
(72) Erfinder: Gründl, Andreas, 82319 Starnberg (DE); Hoffmann, Bernhard, 82319 Starnberg (DE)
(74) Vertreter: Schmidt, Steffen J.

(56) Entgegenhaltungen:
- EP-A1- 1 940 013
- DE-A1- 3 526 166
- DE-T5-112017 001 053
- US-A- 6 137 203
- US-A1- 2013 043 744

## Beschreibung

### Einleitung

Hier wird eine elektrische Scheibenläufermaschine beschrieben, die zum Beispiel für einen Einsatz in einem Fahrzeug, als Antrieb in einem Roboterarm oder zur Positionierung z.B. von Maschinenteilen und dergl. mehr geeignet und vorgesehen ist. Dabei kann es sich auch um eine elektrische Maschine handeln, die als Hilfs- oder Nebenaggregat in dem Fahrzeug oder Fluggerät geeignet und vorgesehen ist.

### Hintergrund

Elektrische Maschinen werden in einer Vielzahl von Industrie-, Mobilitäts- und Komfort- / Sicherheitsanwendungen eingesetzt. Dabei besteht oft die Anforderung nach einer kompakten, leichtgewichtigen Maschine die mit minimaler Verzögerung eine Drehbewegung von wenigen hundert Grad bis zu mehreren (etwa zehn) Vollumdrehungen mit hohem Drehmoment ausführt. Eine weitere Forderung besteht nach guter Eignung zum Betrieb der Maschine mit einem mehrphasigen leistungselektronischen Stellglied (Umrichter oder Wechselrichter). Bisher sind Scheibenläufer, insbesondere Permanentmagnet-Maschinen, meist in Spezialanwendungen wie getriebelosen, langsam laufenden Drehmomentmaschinen anzutreffen. Außerdem werden Scheibenläufermaschinen vor allem eingesetzt, wenn ein kleines Längen-Durchmesser-Verhältnis gefordert ist.

Das Dokument DE 11 2017 001 053 T5 offenbart eine elektrische Maschine mit einen Statorkern und mehrere Spulen. Der Statorkern weist einen Basisabschnitt in Form einer ringförmigen Platte und mehrere Zähne auf, die in einer axialen Richtung von einer Oberfläche des Basisabschnitts vorstehen und in einer Umfangsrichtung angeordnet sind. Die mehreren Spulen sind jeweils durch konzentrierte Wicklung entlang peripherer Oberflächen der mehreren Zähne gewickelt. Der Basisabschnitt weist einen Innenumfangsrand auf, der von einem inneren Ende von jedem der mehreren Zähne aus radial auswärts eingetieft ist, oder der Basisabschnitt weist einen Außenumfangsrand auf, der von einem äußeren Ende von jedem der mehreren Zähne aus radial einwärts eingetieft ist.

Ferner offenbaren auch die Dokumente US 6 137 203 A, EP 1 940 013 A1, US 2013/043744 A1 und DE 35 26 166 A1 jeweils elektrische Maschinen mit einem spulentragenden Stator oder Läufer.

### Zugrundeliegendes Problem

Die zu lösende Aufgabe ist, eine elektrische Maschine bereitzustellen, die in kleinem Bauraum einen effizienten, sicheren Betrieb erlaubt.

### Kurzfassung der hier vorgestellten Lösung

Das obige zugrundeliegende Problem ist, erfindungsgemäß, durch die unabhängige Ansprüche 1 und 3 gelöst. Ein Verfahren zur Herstellung einer Scheibenläufermaschine nach einem der Ansprüche 1 oder 3 ist im Anspruch 12 gegeben. Verschiedene Ausgestaltungen und Varianten gemäß der Erfindung sind in den Nebenansprüchen gegeben.

Insbesondere bei räumlich beengten Anwendungen, in denen die Maschine in ein im Querschnitt mehr-, zum Beispiel viereckiges Profil einzubauen ist, kann mit dieser Ausgestaltung eine nennenswert höhere Leistung erzielt werden, als mit einer im Querschnitt kreisrund gestalteten Maschine, deren Außenumfang den Inkreis des mehreckigen Profil bildet. Im Übrigen erlaubt diese Maschine einen Kurzzeitbetrieb mit Anlaufzeiten im Millisekundenbereich bei sehr hoher Beschleunigung und einer sehr hohen Drehmomentdichte aufgrund des geringen benötigten Bauraums. Diese hier beschriebenen Scheibenläufermaschinen sind sehr geräuscharm und funktionssicher, da sie kein Getriebe benötigen. Außerdem erlauben sie eine einfache Drehwinkel- oder Wegerfassung in der Maschine; ihre Drehzahl / ihr Weg lässt sich sehr effizient regeln. Da sich zwischen den Spulen / Permanentmagneten vorzugsweise kein Eisen befindet, ist ein maximaler Kupfereinsatz zur Minimierung der ohmschen Verluste möglich; außerdem gibt es keine Platzkonkurrenz zwischen einem Eisenkreis und den Feldspulen. Des Weiteren ist keine Begrenzung der Ströme durch Eisensättigung möglich; es gibt nur die Superposition der magnetischen Felder. Anfallende Verlustleistung kann während der kurzen Betriebsdauer in den Leitern der Feldspulen aufgenommen und in der anschließenden Ruhephase abgegeben werden; somit ist keine externe Kühlung erforderlich. Ein Vorteil der hier beschriebenen Scheibenläufermaschinen ist auch die Eignung zum mehrfachen Überlastbetrieb in sehr geringen zeitlichen Abständen.

Der Läufer kann eine Trägerscheibe aus Eisen haben, die in der axialen Magnetmitte auch dick sein kann, sofern sie magnetisierbar ist. Wenn sie an der Ober- und Unterseite liegt, sollte sie dünn sein, damit sie, wenn sie magnetisierbar ist, die Magnetpole nicht kurzschließt. Unmagnetischer Stahl würde nur den Luftspalt vergrößern, was unerwünscht ist.

Unter "zwischen den Spulen / Permanentmagneten befindet sich vorzugsweise kein Eisen" sei verstanden, dass ein dünnes, magnetisierbares Stahlblech an einer oder beiden Oberflächen der Ständer- oder Läuferscheibe zum Beispiel als Gleitlager oder als Träger durchaus möglich ist.

### Ausgestaltungen, Varianten und Eigenschaften

Die folgenden Ausgestaltungen und Varianten gehören zur Erfindung, sofern nicht ausdrücklich anderes angegeben.

Die hier beschriebenen Scheibenläufermaschinen können entweder als Innen- oder als Au-ßenläufermaschinen realisiert sein. Diese Scheibenläufermaschinen können sowohl als elektrischer Motor als auch als elektrischer Generator betrieben werden. Sie kommen insbesondere als Drehmaschine zum Einsatz; aber auch eine Implementierung als Linearmaschine ist in einigen Varianten möglich. Die Scheibenläufermaschinen der hier beschriebenen Art können entweder fremd- oder selbsterregt ausgestaltet sein. Bei fremderregten Maschinen sind eine oder mehrere Erregerwicklungen für die Erregung vorgesehen. Die Erregerwicklung wird zum Beispiel durch eine gesteuerte Stromquelle mit Energie gespeist. Bei einer selbsterregten Scheibenläufermaschine treten Permanentmagnete an die Stelle der Erregerwicklungen.

Eine fremd- oder selbsterregte Scheibenläufermaschine kann als permanent erregte Maschine ausgestaltet sein. Schleifringe zum Speisung mit elektrischer Leistung und Ankerwicklung (en) können dabei als gedruckte Schaltung auf einer dünnen Kunststoff- oder Keramikscheibe realisiert sein. Der elektrische Strom wird im einfachsten Fall über Kohlebürsten direkt auf die die Schleifringe an der Scheibe zugeführt. Die Scheibe trägt somit die Schleifringe und die Läufer-Wicklung(en) und läuft in einem engen Luftspalt zwischen Ständerspulen oder Permanentmagneten. Zur Sicherstellung der mechanischen Funktion können auch Gleitfolien in den/ die Luftspalt/e zwischen die Scheibe/n und Ständerspulen oder Permanentmagnete/n angeordnet sein.

Ein selbsterregter oder permanenterregter Läufer kann eine weichmagnetische Trägerscheibe, zum Beispiel aus weichmagnetischem Stahl haben, an der beidseitig in axialer orientierte Magnetscheibensegmente z.B. aus Ferrit oder kunststoffgebundenem NdFeB angebracht sind. Alternativ dazu kann der selbsterregte oder permanenterregte Läufer als durchgehende Magnetscheibe realisiert sein, die polweise axial alternierend orientiert magnetisiert ist.

Für größere Leistungsdichten wird die hier vorgestellte Scheibenläufermaschine als Doppelscheibenläufer mit Zwischenständer ausgeführt, der z.B. mit Seltenerden-Magnetsegmenten oder entsprechenden Ständerwicklungen versehen und. So entfallen die bei einer Einscheibenläuferausführung auftretenden axialen Zugkräfte. Letztere können auftreten, wenn auf einer Seite kein Ständer mit Rückschlussscheibe angeordnet ist

Scheibenläufermaschinen der hier vorgestellten Art haben durch ihre praktisch eisenfreien Läufer eine hohe Dynamik bei einem geringen Gewicht. Die Läufer sind entweder Anordnungen von (Selten-Erden-)Permamentmagnetelementen oder haben geeignet gestaltete Feldspulen. Das den Scheibenläufermaschinen zugrundeliegende physikalische Prinzip führt zu einem direkt proportionalen Verhältnis zwischen Spannung und Drehzahl sowie Strom und Drehmoment.

Unter "praktisch eisenfrei" sei verstanden, dass auch Varianten mit einer Eisenscheibe in der axial gesehenen Magnetmitte umfasst sind.

Da die Ständer- (und ggf. Läufer-)Spulen bei den meisten Varianten praktisch eisenfrei sind, entfallen auch etwaige Eisenverluste. Auch die Spuleninduktivität kann nennenswert reduziert sein. Die Läufermasse und damit deren translatorisches und rotatorisches Trägheitsmoment sind ebenfalls reduziert. Die Maschinen haben eine geringe Störabstrahlung, eine hohe elektromagnetische Verträglichkeit (EMV), und sie haben keine Reluktanzmomente.

Schließlich haben die Scheibenläufermaschinen eine geringe axiale Länge. Im Ständer auftretende Verlustwärme kann ebenfalls relativ einfach nach außen abgeführt werden, wegen der flächigen Anbindung des Stators an die Rückschluss-Scheibe, zumindest bei Einscheibenläufern. Die nennenswert reduzierte Spuleninduktivität führt zu einer geringeren Leistungsinstallation des Wechselrichters.

Eisenverluste können im magnetischen Rückschluss auftreten, dieser ist deshalb vorzugsweise aus Pulvereisen hergestellt.

Die Läufer- und/oder Ständer-Wicklungen können als gedruckte, gestanzte oder geätzte Leiterbahnen auf/in ein- oder mehrlagigen Leiterplatten realisiert sein. Auch die Einbettung von vorgefertigten Luftspulen aus (Kupfer-, Aluminium- oder dergl.) Draht- oder Blechmaterial in (faserverstärktes) -Kunststoffmaterial (Epoxy, Keramik, PTFE, Polyimid) ist vorgesehen. Die Ständer- und Läuferscheiben mit den Spulen können mittels reibungserhöhenden oder reibungsverringernden, isolierenden Beschichtungen versehen sein.

Durch den Aufbau der Ständer-Feldspulen als Multilayerplatinen ist ein hoher Kupferfüllfaktor bei großer mechanischer Festigkeit möglich; Die erforderliche Windungszahl kann durch Implementierung der Feldspulen in mehreren Multilayerlagen realisiert werden. Die Abstände der Leiterbahnen können auf die doppelte Leiterbahndicke begrenzt sein; dies reduziert den Totraum auf und in den Trägerscheiben. Im Übrigen kann der mehrlagige Spulenaufbau mittels Durchkontaktierungen in Form von vias realisiert sein. Zusätzliche Wärmekapazität in den Trägerscheiben kann durch dünne Alu-, Kupfer- oder Prepreglagen realisiert sein. Statt Metalleinlagen kann auch der Leiterquerschnitt mittels der Alu- oder Kupferlagen vergrößert werden, da dann die Wärmekapazität ebenso vergrößert wird und gleichzeitig die Verluste sinken. Die zum Aufbau der Spule erforderlichen Prepregs tragen nennenswert zur Wärmekapazität bei, da die spezifische Wärme von Kunststoffen im Vergleich zu Metallen hoch ist. Die Außen-Umfangs-Abschnitte der Feldspulen sind in einer Variante im Bereich ohne fehlenden Kreisabschnitt des Kreisrings als in axialer Richtung erhöhte Stirnverbinder gegenüber dem Bereich mit fehlendem Kreisabschnitt des Kreisrings ausgebildet.

Die Außen-Umfangs-Abschnitte der Feldspulen im Bereich ohne fehlenden Kreisabschnitt des Kreisrings sind in einer Variante als mehrlagiges Leitermaterial gegenüber dem Bereich mit fehlendem Kreisabschnitt mit weniger lagigem Leitermaterial ausgebildet.

Die Trägerscheibe des Läufers hat in einer Variante einen Flugkreis-Durchmesser, der mit dem Abstand einer Sehne des fehlenden Kreisabschnitts des Kreisrings vom Zentrum des Kreisrings der Trägerscheibe des Ständers zumindest annähernd zusammenfällt.

Der Kreisring der Trägerscheibe jedes Läufers und/oder der Kreisring der Trägerscheibe jedes Ständers haben in einer Variante jeweils eine Polygonringform (4 - 12 oder mehr-Eck).

Erfindungsgemäß wird eine elektrische Scheibenläufermaschine mit wenigstens einem Läufer und wenigstens einem zu dem Läufer zumindest teilweise korrespondierenden Ständer vorgestellt. Der wenigstens eine Läufer und der wenigstens eine Ständer haben jeweils eine einander zugewandte Stirnseite. Der wenigstens eine Läufer Feldspulen oder Permanentmagnete trägt und der wenigstens

eine Ständer Feldspulen trägt. Zwischen jedem Läufer und jedem Ständer ist jeweils ein Luftspalt ausgebildet. Die Feldspulen und/oder die Permanentmagnete sind derart ausgerichtet und an jedem Läufer bzw. jedem Ständer angeordnet, dass die Feldspulen im stromdurchflossenen Zustand und/oder die Permanentmagnete zumindest zeitweilig gleich- oder gegensinnige Magnetfelder hervorrufen, die eine Dreh- oder Längs-Relativbewegung des Läufers zum Ständer bewirken. Jedes Läufer ist als Kreisring ausgebildet, und in jeden Läufer sind die Permanentmagnete zumindest teilweise eingebettet, oder sind zumindest teilweise eingebettete, ein- oder mehrphasig ausgestaltete Leiterbahnzüge als Feldspulen vorgesehen. Mehrere einphasige Feldspulen des Ständers sind entlang des Umfangs des Ständers versetzt zueinander angeordnet, wobei die Feldspulen jedes Ständers Radial-Abschnitte, d.h. sich radial erstreckende Abschnitte, sowie Innen- und Außen-Umfangs-Abschnitte, d.h. sich in Innen- und Außen-Umfangsrichtung erstreckende Abschnitte, aufweisen. Die Außen-Umfangs-Abschnitte der mehreren einphasigen Feldspulen sind überkreuzungsfrei zueinander angeordnet, wobei die sich radial erstreckenden Abschnitte in axialer Richtung etwa ein n-tel der Höhe der sich in Innen- und Außen-Umfangsrichtung erstreckenden Abschnitte aufweisen, wobei n die Anzahl der einphasigen Feldspulen (20) auf der Trägerscheibe des Ständers (16) ist.

Da die Stirnverbinder keine Überkreuzungen haben, sind sie bei gleicher Polteilung breiter, da zwei von drei Abständen zwischen den einzelnen Leitern wegfallen. Dies hat einen geringeren elektrischen Widerstand zur Folge und benötigt in nur eine reduzierte Wechselrichterleistung. Die kurzen Verbinder mit großem Querschnitt und geringem Widerstand und einen bis zum radial äußeren/inneren Rand gehenden kraftbildenden Leiter der Ständer-Feldspulen vermeiden Krafteinbußen durch Fehllagen der Ströme im Wickelkopf. Die Leiter der Ständer-Feldspulen sind bei großen Radien sind besonders effektiv, da hier Querschnitt und Hebelarm am größten sind.

Die Aufteilung auf mehrere bzw. höherphasige Systeme erlaubt geringere Leistung der einzelnen Halbleiter-Schalter in der Ansteuerelektronik (Wechselrichter) und geringere Rückwirkungen auf den Zwischenkreis. Dies gilt insbesondere für zwei oder drei versetzt taktende dreiphasige Systeme. Auch Geräuschvorteile sind durch eine höherfrequente Anregung erzielbar. Bei höherphasigen Systemen fällt der durch den Phasenversatz hervorgerufene Drehmomentverlust geringer aus.

In einer Variante sind die Feldspulen des Ständers Y-oder Δ-verschaltete Anordnungen, oder sie sind einzeln gespeist. Dabei bestimmt sich insbesondere die räumliche Anordnung der Feldspulen zu den Permanentmagneten des Läufers durch die Phasenzugehörigkeit.

Die Radial-Abschnitte der Feldspulen jedes Ständers verlaufen gerade bis zu einem Bereich der Außen-Umfangs-Abschnitte.

Als Stirnverbinder ist in einer Variante ein Leiterabschnitt an einer äußeren Mantelfläche der Trägerscheibe des Ständers angeordnet. Dabei können die äußeren Stirnverbinder über stirnseitige Kantenmetallisierung angelötet sein.

Aufeinander folgende Radial-Abschnitte der Feldspulen des Ständers sind in einer Variante auf zwei in axialer Richtung benachbarte Trägerscheiben des Ständers verteilt, wobei Leiter an jeweiligen Mantelflächen der benachbarten Trägerscheibe des Ständers die Radial-Abschnitte der Feldspulen jedes Ständers kontaktieren.

Die Feldspulen des Ständers sind in einer Variante aus mehreren einzelnen Platinen gebildet, die beidseitig kupferhaltige Schichten aufweisen, wobei zwischen zwei kupferhaltigen Schichten benachbarter Platinen eine Lotschicht, eine Sinterschicht oder der Form der Feldspule entsprechende Kupferfolie angeordnet ist. Damit kann bei schmalen Leitern ein nennenswerter Widerstandsvorteil erreicht werden.

Als Stirnverbinder sind in einer Variante an einem inneren Rand der Trägerscheibe des Ständers zwei Leiter etwa gleich lang und ein dritter Leiter ist zwischen den beiden etwa gleich langen Leitern angeordnet und überragt diese in radialer Richtung nach innen. Als Stirnverbinder ist bei dem einen der beiden etwa gleich langen Leiter eine Querverbindung an der einen Seite, und bei dem anderen der beiden etwa gleich langen Leiter eine Querverbindung an der anderen Seite der Leiteroberfläche angeordnet, und der dritte Leiter hat radial innenliegend an beiden Seiten jeweils eine Querverbindung. Die drei Leiter sind mit ihren Querverbindungen elektrisch kontaktiert.

Die drei Leiter und ihre Querverbindungen sind hinsichtlich ihrer Abmessungen und Querschnitte so dimensioniert, dass die elektrischen Widerstände der jeweiligen Feldspulen des Ständers zumindest annähernd übereinstimmen.

Dabei können die drei Leiter und ihre Querverbindungen mittels Reihen oder Feldern von Durchkontaktierungen nach Art offener oder gedeckelter thermal Vias miteinander verbunden sein.

Sensorspulen eines induktiven Winkelmessystems sind in einer Variante , die nicht zur Erfindung gehört, radial innerhalb der

Innen-Umfangs-Abschnitte des Ständers der Platine zugeordnet und mit einer Steuerung verbunden. Dabei sind der Trägerscheibe des Läufers mit den Sensorspulen zusammenwirkende induktive Strukturen zugeordnet. Dies ist eine sehr robuste, kostengünstige Anordnung mit schneller Rückmeldung über die die Winkellage, die auch unempfindlich gegen Verschmutzung aller Art sowie elektromagnetische Störungen ist.

Gemäß einem weiteren Aspekt , der nicht zur Erfindung gehört, der elektrischen Scheibenläufermaschine ist diese mit wenigstens einem Läufer und wenigstens einem zu dem Läufer zumindest teilweise korrespondierenden Ständer ausgestattet. Dabei haben der wenigstens eine Läufer und der wenigstens eine Ständer jeweils eine einander zugewandte Stirnseite. Der wenigstens eine Läufer und der wenigstens eine Ständer tragen jeweils Feldspulen oder Permanentmagnete tragen. Zwischen jedem Läufer und jedem Ständer ist jeweils ein Luftspalt ausgebildet. Die Feldspulen und/oder die Permanentmagnete sind derart ausgerichtet und an jedem Läufer bzw. jedem Ständer so angeordnet sind, dass die Feldspulen im stromdurchflossenen Zustand und/oder die Permanentmagnete zumindest zeitweilig gleich- oder gegensinnige Magnetfelder hervorrufen, die eine Dreh- oder Längs-Relativbewegung des Läufers zum Ständer bewirken. Jeder Läufer ist als Kreisring ausgebildet. In jeden Läufer sind die Permanentmagnete zumindest teilweise eingebettet, oder zumindest teilweise eingebettete, ein- oder mehrphasig ausgestaltete Leiterbahnzüge sind als Feldspulen vorgesehen. Jeder Läufer hat eine axiale Höhe nahe dem Zentrum / der Mittellängsachse der Scheibenläufermaschine, die höher ist als am äußeren Rand des jeweiligen Läufers. In jeden Läufers sind die Permanentmagnete / Feldspulen zumindest teilweise so eingebettet, dass die axiale Höhe nahe dem Zentrum des Kreisrings höher ist als am äußeren Rand des Läufers, wobei die Änderung der axialen Höhe in radialer Richtung konzentrisch stufenlos oder gestuft ist.

Der die Permanentmagnete tragende Läufer kann in radialer Richtung mit mehreren Magnetringen ausgeführt sein. Die Multilayerplatine wird zum Zentrum hin dicker und vermeidet damit einen Widerstandsanstieg im Innenbereich. Die axiale Höhe der Magnetringe kann nach innen hin zur Optimierung des Wirkungsgrades zunehmen. Entsprechend der geringeren Verlustleistung kann der Wechselrichter und die Stromversorgung schwächer ausgeführt werden.

Der Läufer hat in einer Variante , die nicht zur Erfindung gehört, eine Scheibe aus Stahl, die mit einer Maschinenwelle drehfest und ggf. längsverschieblich verbunden ist. An wenigsten einer ihrer beiden Seiten trägt die Scheibe des Läufers vorzugsweise als Zylinder- oder Kegel-Ringsegmente gestaltete Permanentmagnete. Eine Stahlscheibe mitten im Läufer gepaart mit gleichsinnig orientierten Permanentmagneten ergibt einen stabileren Aufbau. Gegensinnig orientierte Permanentmagnete erlauben zusätzlich eine Leitungs-Rückführung ohne Überkreuzung auf einer zweiten Scheibe, wenn auch zu Lasten eines höheren Trägheitsmomentes.

An der Scheibe des Läufers sind in einer Variante ein- oder beidseitig Permanentmagnete angeordnet. Miteinander in axialer Richtung fluchtende Permanentmagnete haben jeweils gleiche oder gegensinnige magnetische Orientierung.

In einer Variante , die nicht zur Erfindung gehört, sind an der Scheibe des Läufers aus Stahl auf beiden Seiten Miteinander in axialer Richtung fluchtende, gegensinnig orientierte Permanentmagnete angeordnet. Damit ergeben sich ein oberer und ein unterer Magnet-Flussring mit dem Stahlkern als gemeinsamem Rückschluss. Mithin können im Betrieb die Ströme in den Spulen im oberen und unteren Ständer gegensinnig laufen. Damit können die Stirnverbinder an den Scheiben der Ständer parallel zur Mittellängsachse verlaufen und benötigen keine tangentiale Komponente zwischen Hin- und Rückleiter. Damit ist ein Stirnverbinder auch stabiler und mit größerem Querschnitt auszugestalten. Mithin sind geringere elektrische Verluste zu erreichen.

In einer Variante , die nicht zur Erfindung gehört, ist die Scheibe des Läufers mit der Maschinenwelle einstückig gestaltet. Die beidseitig angeordneten Permanentmagnete sind als dünne Magnetscheiben ausgestaltet, und die zum äußeren Rand hin abnehmende axiale Höhe der Trägerscheibe des Läufers ist im Wesentlichen durch abnehmende Dicke der Scheibe des Läufers bei im Wesentlichen gleicher Dicke der Permanentmagnete erreicht. Dabei ergibt sich eine variable Spulendicke bei gleicher Dicke der Permanentmagnete.

Die Scheibe des Läufers hat in einer Variante , die nicht zur Erfindung gehört, am äußeren Umfang ein ringförmiges Gleitlager. Die Axialführung ist weitgehend kräftefrei, da sich der Läufer während des Betriebs axial in einem symmetrischen Feld befindet. Die Drehmomentbildung ergibt in Summe ebenfalls keine axialen Kräfte Durch die außenliegende Axialführung des Läufers wird eine sehr gute Planlage erreicht. Damit ist ein sehr kleiner Luftspalt zwischen Läufer und Ständer möglich. Das führt zu reduzierten Verlusten und entsprechenden Vorteilen im Wechselrichter.

Die Trägerscheibe des Ständers sowie ferromagnetische Rückschlussteile und/oder ein Gehäuse sind in einer Variante , die nicht zur Erfindung gehört, in axialer Richtung oder schräg zur Längsmittelachse der Scheibenläufermaschine in zwei oder mehr Teile geteilt. Dabei sind die einzelnen Teile der Trägerscheibe und der Rückschlussteile in jeweilige Gehäuseteile form-und/oder stoffschlüssig eingebracht sind.

In einer Variante , die nicht zur Erfindung gehört, sind die Permanentmagnete des Läufers und die Spulen des Ständers gegeneinander durch eine Isolierschicht voneinander getrennt. Jede der Scheiben des Ständers, die ferromagnetischen Rückschlüsse und die Scheibe des Läufers sind relativ zu einander in axialer Richtung so gelagert, dass jede der Scheiben des Ständers an dem entsprechenden der ferromagnetischen Rückschlüsse im angezogenen Zustand anliegt, und jede der Scheiben des Ständers gegenüber der Scheibe des Läufers einen Luftspalt von etwa 0,1 mm bis etwa 0.3 mm einhält.

Als Permanentmagnete sind in einer Variante , die nicht zur Erfindung gehört, in jeden Läufer oder jeden Ständer eingebettete oder zumindest teilweise frei liegende Permanentmagnete vorgesehen, die in axialer Richtung etwa 0.5 bis 3-mal, vorzugsweise ein- bis zweimal so hoch wie der Luftspalt sind.

Dabei sind die Permanentmagnete vorzugsweise Selten-Erde-Magnete. Der Ständer hat vorzugsweise drei- oder höherphasig ausgestaltete Ständerspulen.

Die Trägerscheibe jedes Läufers ist in einer Variante , die nicht zur Erfindung gehört, drehfest und in axialer Richtung beweglich auf einer Maschinenwelle aufgenommen. Die Trägerscheibe des Läufers und jede Trägerscheibe des Ständers sind in einer Variante in axialer Richtung beweglich zueinander angeordnet. Hierbei kann eine hier nicht weiter erläuterte externe Bremse und axiale Abkopplung externer Wellenverschiebungen vorgesehen sein.

Zwischen oder in den Feldspulen befindlicher Raum des Läufers und/oder des Ständers ist in einer Variante, die nicht zur Erfindung gehört, eisenlos. Im Ständer ist kein Eisen verbaut. Axial außerhalb des Ständers kann ein eisenhaltiger (magnetischer) Rückschluss oder ein Anker für die weiter unten erläuterten Zugspulen vorgesehen sein.

An beiden Stirnseiten der Maschine können eisenhaltige Abdeckungen vorgesehen sein, die zur Aufnahme hoher magnetischer Axialkräfte ausgestaltet sind, und/oder zur Magnetfluss-Rückführung ausgestaltet sind.

Die vorstehenden Merkmale und Eigenschaften können zusammenwirken und dabei auch weitere Vorteile erbringen. Es sei verstanden, dass sie einzeln, teilweise oder auch vollständig miteinander in einer konkreten Variante der Scheibenläufermaschine kombiniert werden können.

Erfindungsgemäs wird einem weiteren Aspekt hier ein Verfahren zur Herstellung einer elektrischen Scheibenläufermaschine mit einem oder mehreren der vorangehenden Eigenschaften oder Merkmale vorgestellt. Dieses Verfahren hat die folgenden Schritte: Bereitstellen eines in axialer Richtung oder schräg zur Längsmittelachse der Scheibenläufermaschine in zwei oder mehr Teile geteilten Ständers, ferromagnetischen Rückschlusses, und Gehäuses; Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt; stoff- oder formschlüssiges Einfügen der Teile des Ständers und des ferromagnetischen Rückschlusses zumindest teilweise in ein jeweiliges Gehäuseteil; Zusammenfügen der Gehäuseteile mit den Teilen des Ständers und des Rückschlusses zu einem vollständigen Gehäuse zusammen mit einer Läuferanordnung, welche auch eine Maschinenwelle umfasst, wobei die Gehäuseteile und die Läuferanordnung zueinander passende Gleitlager für die Läuferanordnung aufweisen.

In einer Variante des Verfahrens zur Herstellung einer elektrische Scheibenläufermaschine hat das Verfahren die folgenden Schritte: Bereitstellen einer in axialer Richtung oder schräg zur Längsmittelachse der Scheibenläufermaschine in zwei oder mehr Teile geteilten Läuferlagerscheibe mit einer Aufnahme für den Läufer; Einsetzen des Läufers in die Aufnahme; Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt.

In weiteren Varianten wird die Läuferlagerscheibe mit einen Gehäuse verbunden, oder die Läuferlagerscheibe bildet zumindest teilweise wenigstens einen Abschnitt des Gehäuses.

Eine derartige Scheibenläufermaschine kann vor und während des Betriebs an einem Wechselrichter als Versorgungsquelle sehr einfach und zuverlässig einer Selbstdiagnose unterworfen werden. Dazu werden die Temperatur der Scheibenläufermaschine, die Umgebungstemperatur, die Zwischenkreisspannung und die Reaktion des Motors (letztere zum Beispiel anhand des Winkelsensors) ausgewertet. Abhängig von dem Ergebnis der Selbstdiagnose können folgende Szenarien erkannt und behandelt werden:
1. Sofern eine Temperatur der Scheibenläufermaschine und/oder der Umgebung von unter 0°C erkannt wird, was ein Festfrieren von Läufer im Ständer besorgen lässt, können die Scheibenläufermaschine und/oder der Wechselrichter mit nicht Kraft-/Drehmoment bildendem Strom aufgewärmt werden.
2. Sofern eine Temperatur der Scheibenläufermaschine kleiner die Umgebungstemperatur erkannt wird, kann wie unter 1. oben vorgegangen werden.
3. Eine Prüfung auf Eintreten einer erwarteten Reaktion (zum Beispiel Drehwinkel oder Drehmoment) kann während des Betriebs ständig erfolgen.
4. Eine Prüfung auf intakte Ständer-/Läufer-Feldspulen und Wechselrichter kann durch Überwachung der Spannungsantwort im Zwischenkreis des Wechselrichters erfolgen.
5. Eine Prüfung auf Masseschluss kann über das Potentialverhalten der potentialfreien Ansteuerungen des Wechselrichters erfolgen.
6. Eine Prüfung auf Leistung der Energieversorgung kann mit einer kurzzeitigen, nicht Kraft-/Drehmoment bildenden Bestromung aus dem Wechselrichter erfolgen.

Der Maschinenaufbau ist sehr einfach und kostengünstig zu realisieren, da auf die Lamellierung der Rückschlüsse verzichtet werden kann, keine Nuten vorhanden sind und die Materialien effizient genutzt werden.

Mit der hier vorgestellten Scheibenläufermaschine kann auf mechanische Kraftübertragungskomponenten wie Getriebe oder Gesperre verzichtet werden. Damit ist die elektrische Maschine einfach in die angetriebene Ausrüstung integrierbar.

Die Trägerscheibe jedes Läufers und/oder die Trägerscheibe jedes Ständers können als einlagige oder als mehrlagige Platine ausgebildet sein. Die Feldspulen können in die Trägerscheibe jedes Läufers oder jedes Ständers eingebettete oder zumindest teilweise frei liegende, einphasige oder mehrphasig ausgestaltete, Buntmetall enthaltende Leiterbahnzüge, ggf. mit Durchkontaktierungen aufweisen. Bei Varianten , die nicht zur Erfindung gehören, der Scheibenläufermaschine mit Permanentmagneten können in die Trägerscheibe jedes Läufers oder jedes Ständers eingebettete oder zum Luftspalt hin zumindest teilweise frei liegende Permanentmagnete vorgesehen sind, die in axialer Richtung etwa 0.5 bis 3-mal, vorzugsweise ein- bis zweimal so hoch wie die Abmessung des Ständers in axialer Richtung sein können. Die Permanentmagnete sind hierbei vorzugsweise als Selten-Erde-Magnete mit einer hohen Remanenzinduktion und/oder mit einer hohen Koerzitivfeldstärke ausgestaltet.

Jeder Läufer kann drehfest und in axialer Richtung beweglich auf einer Maschinenwelle aufgenommen sein. Die/der Läufer und die/der Ständer können in axialer Richtung beweglich zueinander angeordnet sein.

Zwischen Läufers und Ständer befindlicher Raum kann bei einer Variante der Scheibenläufermaschine eisenlos ausgestaltet sein.

Der Ständer kann drei- oder höherphasig ausgestaltete Ständerspulen aufweisen, die mit entsprechenden Läufern zu mehreren gekoppelten einphasigen Maschinen konfiguriert sein können. Alternativ oder zusätzlich kann jeder Läufer der Scheibenläufermaschine als vorzugsweise einphasiger Wirbelstromläufer oder als Magnetläufer ausgestaltet sein.

Bei einer Variante können an beiden Stirnseiten der Maschine eisenhaltige Abdeckungen vorgesehen sein, die zur Aufnahme hoher magnetischer Axialkräfte ausgestaltet sein können. Diese Axialkräfte können aus zum Beispiel 5 - 20 bar magnetischem Axialdruck im Betrieb resultieren. Dazu können die eisenhaltigen Abdeckungen zum Beispiel durch Verstärkungsrippen ausreichend verwindungs- und biegesteif gestaltet sein. Alternativ oder zusätzlich kann jede oder nur eine der eisenhaltigen Abdeckungen zur Magnetfluss-Rückführung ausgestaltet sind. Diese Maßnahmen führen zur Reduzierung der ohmschen Verluste, solange noch keine magnetischen Sättigungseffekte auftreten.

In einer anderen Variante kann die Scheibenläufermaschine aus einer geraden Zahl symmetrischer Maschinen gebildet ist, die axial hintereinander angeordnet sind. Hierbei kann die Magnetfluss-Rückführung und / oder die Strom-Rückführung einer geradzahligen Maschine im Ständer einer ungeradzahligen Maschine erfolgen. Mit anderen Worten wird bei einer Anordnung aus zwei oder mehr Maschinen der Strom der zweiten Maschine im Ständer der ersten Maschine zurückgeführt. Das reduziert den Bauraumverlust der Wickelköpfe deutlich.

Die Trägerscheiben der Läufer und/oder der Ständer können mit einer relativ zur Stahl-, Kupfer-, Eisenoberfläche des Läufers bzw. Ständers /reibungserhöhenden oder reibungsverringernden Beschichtung versehen sein. Auf die Läufer und Ständer kann auch bei solchen Varianten eine Einrichtung zur Ausübung von Zug- oder Schubkraft wirken. Diese Einrichtung kann insbesondere eine oder mehrere Zug- oder Schubfedern umfassen. Dies erlaubt die Realisierung sehr effizienter, getriebeloser selbsthemmender oder freilaufender Maschinen. Weiterhin können im Betrieb der Scheibenläufermaschine elektrische Ströme durch die Ständerspulen mit vorbestimmter Phasenlage gegenüber der Position der Spulen oder Permanentmagnete der Läufer eine anziehende oder abstoßende Kraft zwischen Läufer- und Ständerscheiben bewirken. Hierdurch lasst sich sowohl eine Reibungsbremswirkung oder eine Arretierfunktion realisieren, als auch eine berührungsfreie Rotation der Läufergegenüber dem Ständerscheiben unterstützt wird.

Weitere Merkmale, Eigenschaften, Vorteile und mögliche Abwandlungen dieser elektrischen Maschine werden anhand der nachstehenden Beschreibung verdeutlicht, in der auf die beigefügten Zeichnungen Bezug genommen ist.

Die hier beschriebenen Varianten sowie deren Funktions- und Betriebsaspekte dienen lediglich dem besseren Verständnis ihrer Struktur, Funktionsweise und Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zu Gegenstad weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

### Kurzbeschreibung der Figuren

Fig. 1 zeigt eine als Scheibenläufermaschine gestaltete elektrische Maschine in einer schematischen teilweise geschnittenen seitlichen Perspektive.
Fig. 2 zeigt einen Ausschnitt aus einer dreiphasigen Ständerspule der Scheibenläufermaschine aus Fig. 1 in einer schematischen perspektivischen Draufsicht.
Fig. 2a - 2c zeigen jeweils Ausschnitte von Varianten der Scheibenläufermaschine in perspektivischen Ansichten.
Fig. 2d zeigt einen Stirnverbinderverband von Stirnverbindern aus den Varianten der Fig. 2a - 2c.
Fig. 3 zeigt eine Läuferscheibe in einer Variante, die nicht zur Erfindung gehört, zu Fig. 1 in einem schematischen seitlichen

Querschnitt.

### Detailbeschreibung mehrerer Varianten

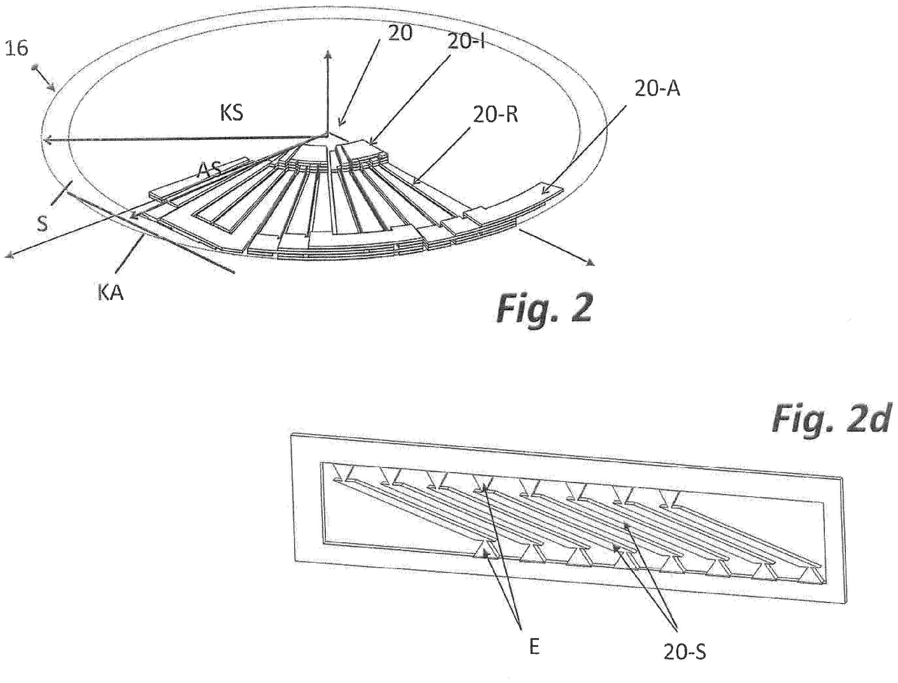

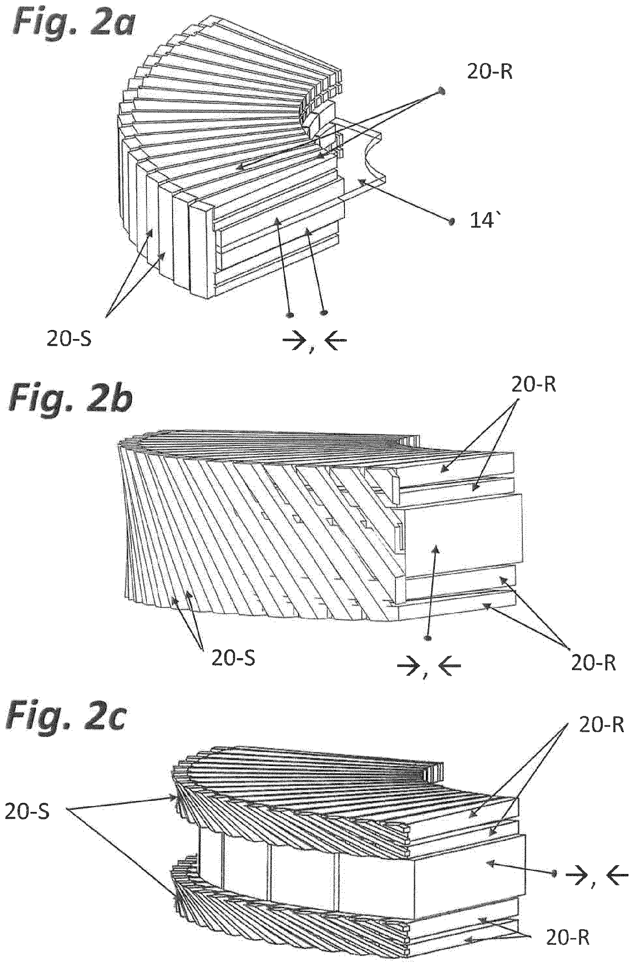

In den Fig. sind Varianten einer elektrischen Maschine in Gestalt einer Scheibenläufermaschine 10 gezeigt. Diese Scheibenläufermaschine 10 hat einen Läufer 14 und einem zumindest teilweise korrespondierenden Ständer 16. Der Läufer 14 hat im vorliegenden Beispiel eine Trägerscheibe 14', und der Ständer 16 hat hier zwei axial zur Mittellängsachse des Läufers 14 fluchtende Trägerscheiben 16'. Dabei tragen die beiden Trägerscheiben 16' des Ständers 16 in dieser gezeigten Variante jeweils Feldspulen 20, die im Zusammenhang mit den Fig. 2, 2a - 2d näher erläutert sind. Die Trägerscheiben 14' des Läufers 14 tragen Permanentmagnete →, ←.

Der Läufer 14 und der Ständer 16, genauer gesagt deren jeweilige Trägerscheiben 14', 16' haben jeweils eine einander zugewandte Stirnseite 14a, 14b; 16a, 16b. Dabei ist zwischen der Läufer-Trägerscheibe 14' und einer benachbarten Ständer-Trägerscheibe 16' jeweils ein Luftspalt 18 ausgebildet.

Die Feldspulen 20 oder die Permanentmagnete →, ← sind derart ausgerichtet und an der Trägerscheibe 14' jedes Läufers 14 bzw. der Trägerscheibe 16' jedes Ständers 16 angeordnet sind, dass die Feldspulen 20 im stromdurchflossenen Zustand und/oder die Permanentmagnete →, ← zumindest zeitweilig gleich- oder gegensinnige Magnetfelder hervorrufen, die eine Dreh- oder Längs-Relativbewegung des Läufers 14 zum Ständer 16 bewirken.

Die Scheibenläufermaschine 10 hat an ihren beiden Stirnseiten (oben, unten) eisenhaltige Abdeckungen 22. In den Abdeckungen 22 sind in der gezeigten Variante jeweils ein Lager 22a zur Aufnahme einer der Übersichtlichkeit in dieser Fig. nicht gezeigten Maschinenwelle 26 vorgesehen. Außerdem sind die eisenhaltigen Abdeckungen 22 als Magnetfluss-Rückführung ausgestaltet.

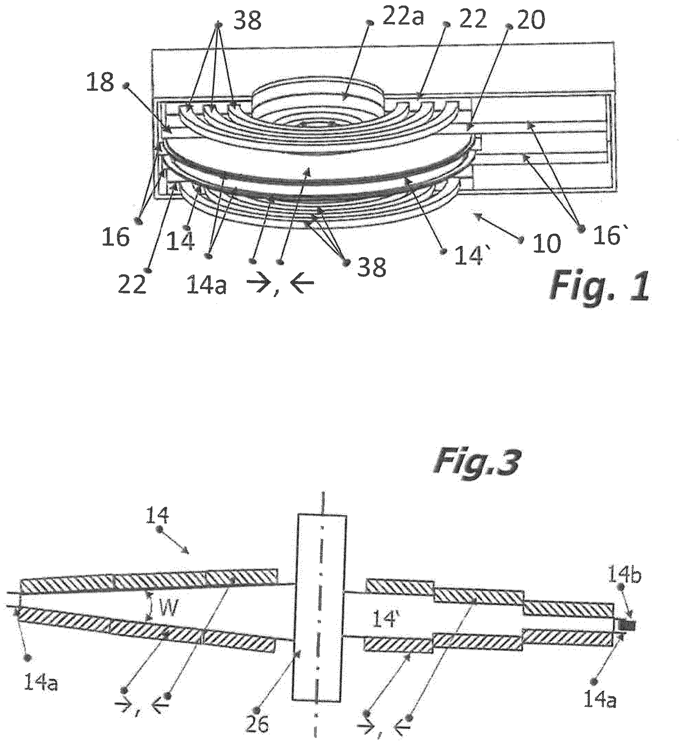

Die Trägerscheibe 14' jedes Läufers 14 und die Trägerscheibe 16' jedes Ständers 16 sind in der veranschaulichten Variante als mehrlagige Platinen aus glasfaserverstärktem Epoxid ausgebildet. Die Feldspulen 20 sind hier in die Trägerscheibe 16' jedes Ständers 16 eingebettete mehrphasig ausgestaltete, Kupfer enthaltende Leiterbahnzüge mit Durchkontaktierungen 20a. Zwischen oder in den Feldspulen 20 befindlicher Raum des Läufers 14 und/oder des Ständers 16 ist eisenlos. Die in Fig. 2 gestrichelt gezeigten Abschnitte der Feldspulen 20 sind in die Unterseite der Trägerscheibe 16' jedes Ständers 16 eingebettet, die durchgehend veranschaulichten Abschnitte der Feldspulen 20 sind in die Oberseite der Trägerscheibe 16' jedes Ständers 16 eingebettet. In Fig. 2 sind die einzelnen Phasen der Feldspulen 20 des Ständers 16 veranschaulicht. Hier sind die Trägerscheiben 16' des Ständers 16 der besseren Übersichtlichkeit weggelassen. Damit sind der Verlauf und die relative Lage der Ständer-Feldspulen zueinander gut erkennbar. So fluchten die mehreren Phasen der Ständer-Feldspulen, räumlich dicht gepackt mit den über / unter ihnen liegenden Läufer-Permanentmagneten (siehe Fig 3).

Die Maschinenwelle 26 hat einen gezahnten Abschnitt, auf dem die Trägerscheiben 14' jedes Läufers 14 drehfest und in axialer Richtung beweglich aufgenommen sind. Die Ständer-Trägerscheiben 16' sind auf vier Zapfen an einer der Abdeckungen 22 drehfest und ebenfalls längsverschieblich aufgenommen. Damit sind die Läufer-Trägerscheiben 14' des Läufers 14 die Ständer-Trägerscheiben 16' in axialer Richtung entlang der Maschinenwelle 26 beweglich zueinander angeordnet.

Wie in Fig. 2 veranschaulicht, ist die Trägerscheibe 16' jedes Ständers 16 als Kreisring ausgebildet, dem in der gezeigten Variante ein Kreisabschnitt KA zum Vollkreis fehlt. Dabei haben die Feldspulen 20 jedes Ständers 16 Radial-Abschnitte 20-R sowie Innen- 20-I und Au-Umfangs-Abschnitte 20-A aufweisen, wobei die Außen-Umfangs-Abschnitte der Feldspulen 20 im Bereich des fehlenden Kreisabschnitts KA des Kreisrings einen höheren elektrischen Widerstand aufweisen als die Außen-Umfangs-Abschnitte der Feldspulen 20 im Bereich ohne fehlenden Kreisabschnitt KA des Kreisrings. Dieser erhöhte Widerstand kommt dadurch zustande, dass die Außen-Umfangs-Abschnitte 20-A der Feldspulen 20 nicht, wie am übrigen Außenumfang der Feldspulen 20 erhöht ist, sondern, weil sie noch im Flugkreis des Läufers 16 liegen, aus niedrigeren, einfachen Lagen gebildet sind. Mit anderen Worten sind die Au-βen-Umfangs-Abschnitte 20-A der Feldspulen 20 im Bereich ohne fehlenden Kreisabschnitt KA des Kreisrings als in axialer Richtung erhöhte Stirnverbinder gegenüber dem Bereich mit fehlendem Kreisabschnitt KA des Kreisrings ausgebildet. Genauer gesagt sind die Außen-Umfangs-Abschnitte 20-A der Feldspulen 20 im Bereich ohne fehlenden Kreisabschnitt KA des Kreisrings als mehrlagiges Leitermaterial gegenüber dem Bereich mit fehlendem Kreisabschnitt KA mit wenigerlagigem Leitermaterial ausgebildet. Der besseren Übersichtlichkeit wegen sind in Fig. 2 nur die Feldspulen 20 gezeigt sind, ohne die sie tragenden Platinen. Dabei hat die Trägerscheibe des Läufers 16 einen Flugkreis-Durchmesser, mit dem Abstand AS einer Sehne S des fehlenden Kreisabschnitts KA des Kreisrings vom Zentrum Z des Kreisrings KS der Trägerscheibe des Ständers 18 zumindest annähernd zusammenfällt.

Der Kreisring der Trägerscheibe 14' jedes Läufers 14 und/oder der Kreisring der Trägerscheibe 16' jedes Ständers 16 können abweichend von der gezeigten Kreisform auch jeweils eine Polygonringform haben.

In der gezeigten Variante in Fig. 2 sind mehrere einphasige Feldspulen 20 des Ständers 16 entlang des Umfangs der Trägerscheibe des Ständers 16 versetzt zueinander angeordnet. Die Außen-Umfangs-Abschnitte 20-A der mehreren Einzelphasen der Feldspulen 20 sind hier überkreuzungsfrei zueinander angeordnet.

Die Feldspulen 20 des Ständers 16 können als Y- oder Δ-verschaltete Anordnung betrieben werden, oder einzeln gespeist sein. Dabei bestimmt sich insbesondere die räumliche Anordnung der Feldspulen 20 zu den unterschiedliche gepolten einzelnen Segmente der Permanentmagnete →, ←des Läufers 14 die Phasenzugehörigkeit. Wie in Fig. 2 veranschaulicht, verlaufen die Radial-Abschnitte 20-R der Feldspulen 20 jedes Ständers 16 im Wesentlichen zwischen den Bereichen der Innen-Umfangs-Abschnitte 20-I bis zu den Bereichen der Außen-Umfangs-Abschnitte 20-A.

Als Stirnverbinder ist in einer weiteren Variante, siehe Fig. 2a, ein Leiterabschnitt 20-S an einer äußeren Mantelfläche der Trägerscheibe 16' des Ständers 16 angeordnet. Damit ist es auch möglich, die Radial-Abschnitte 20-R der Feldspulen 20 auf der Oberseite der Trägerscheibe 16' des Ständers 16 mit den Radial-Abschnitten 20-R der Feldspulen 20 auf der Unterseite der Trägerscheibe 16' des Ständers 16 verbinden, um die Feldspulen zu bilden.

Wie zum Beispiel in Fig. 2a gezeigt ist, hat der Läufer 14 mit den Permanentmagneten →, ← eine Eisenscheibe 14', bei der auf beiden Seiten dünne Magnetpole aufgeklebt sind. Die dünnen Magnetpole lassen sich als ganze Scheibe einfach magnetisieren. In einer Variante sind die übereinanderliegenden Magnetpole gegensinnig orientiert, so dass sich der magnetische Fluss zum nächsten Pol über die Eisenscheibe 14' zwischen ihnen schließt. Damit erzeugt auf der Unterseite der gegensinnig gerichtete elektrische Strom ein in die gleiche Drehrichtung gerichtetes Drehmoment wie der elektrische Strom auf der Oberseite der Eisenscheibe 14'. Die als Stirnverbinder wirkenden Leiterabschnitte 20-S an der äußeren Mantelfläche der Trägerscheibe 16' sind vorzugsweise kurz und breit. Die die Feldspulen bildenden Leiterabschnitte der Multilayerlagen sind in jedem Ständer 16 alle parallel geschaltet.

Bei der in Fig. 2b veranschaulichten Variante reichen die als Stirnverbinder wirkenden Leiterabschnitte 20-S von den Feldspulenabschnitten eines ersten Ständers zu den Feldspulenabschnitten eines zweiten Ständers. In der gezeigten Variante sind keine geteilten Permanentmagnete →, ← keine Eisenscheibe für den Läufer realisiert. Vielmehr ist die Läuferscheibe mit abschnittsweise durchmagnetisiert. Die Stirnverbinder 20-S verlaufen hier schräg, damit der Rückstrom unter den benachbarten Magneten hindurch geführt ist. Wegen des höheren Abstandes als bei der einseitigen Rückführung (siehe Fig. 2c) ist der Querschnitt der Verbinder günstiger. Auch hier sind die die Feldspulen bildenden Leiterabschnitte der Multilayerlagen sind in jedem Ständer 16 alle parallel geschaltet.

Bei der in Fig. 2c veranschaulichten Variante sind die Durchkontaktierungen ebenfalls durch am Umfang der Ständerscheibe befindliche Stirnverbinder in Form von Leiterabschnitten 20-S ersetzt. Hier wird, so wie bei den anderen Varianten mit randseitigen Stirnverbindern anstelle der Durchkontaktierungen eine Verbesserung des erzielbaren Drehmoment erreicht, weil die geraden, radialen Leiterabschnitte 20-R bis zum Rand der Ständerscheibe reichen. Der Ständer 16 hat eine Ober- und Unterlage mit den radialen Leiterabschnitten 20-R zur Hin- und Rückführung des Stromes.

Ein in Fig. 2d veranschaulichter Stirnverbinderband ist in einem Rahmen z.B. in Ätztechnik oder in Laserschnitt-, oder Stanztechnik hergestellt. Der Stirnverbinderband wird noch in dem Rahmen befindlich stirnseitig auf die radialen Leiterabschnitte 20-R aufgelötet. Anschließend wird der Rahmen an den Engstellen E von den Stirnverbindern 20-S abgetrennt.

In einer weiteren aufeinander Variante, siehe Fig. 2b, sind aufeinander folgende Radial-Abschnitte 20-R der Feldspulen 20 des Ständers 16 auf zwei in axialer Richtung benachbarte, in dieser Darstellung der Übersicht wegen nicht gezeigte Trägerscheiben 16' des Ständers 16 verteilt. Dabei kontaktieren am Umfang schräg orientierte Leiterstücke 20-S an jeweiligen Mantelflächen der benachbarten Trägerscheibe 16' des Ständers 16 die Radial-Abschnitte 20-R der Feldspulen 20 jedes Ständers 16. Eine besondere Lösung für die Stirnverbinder ist insbesondere am Außenumfang wirksam, da ein Drehmomentvorteil nutzbar ist. Außerdem ist bei den Varianten mit Rückschluss über die zweite Ständerscheibe diese Verbindung wegen der Welle nur radial außen möglich.

Die Feldspulen 20 des Ständers 16 sind aus mehreren einzelnen Platinen gebildet, die beidseitig kupferhaltige Schichten aufweisen. Um einen für vorgegebene Stromtragfähigkeit erforderlichen Leiterquerschnitt zu erhalten, sind zwischen zwei kupferhaltigen Schichten benachbarter Platinen eine Lotschicht, eine Sinterschicht, und/oder Kupferfolie angeordnet.

Als Stirnverbinder an einem inneren Rand der Trägerscheibe 16' des Ständers 16 sind zwei Leiter etwa gleich lang und ein dritter Leiter zwischen den beiden etwa gleich langen Leitern angeordnet ist und diese überragt in radialer Richtung. Als Stirnverbinder ist bei dem einen der beiden etwa gleich langen Leiter eine Querverbindung an der einen Seite, und bei dem anderen der beiden etwa gleich langen Leiter eine Querverbindung an der anderen Seite der Leiteroberfläche angeordnet. Der dritte Leiter hat radial innenliegend an beiden Seiten jeweils eine Querverbindung, und die drei Leiter sind mit ihren Querverbindungen elektrisch kontaktiert.

Die drei Leiter und ihre Querverbindungen sind hinsichtlich ihrer Abmessungen und Querschnitte so dimensioniert, dass die elektrischen Widerstände der jeweiligen Feldspulen 20 des Ständers 16 zumindest annähernd übereinstimmen. Die drei Leiter und ihre Querverbindungen sind mittels Reihen oder Feldern von Durchkontaktierungen nach Art offener oder gedeckelter thermal Vias miteinander verbunden.

Die Radial-Abschnitte 20-R der einzelnen Feldspulen 20 haben in axialer Richtung etwa ein *n-*tel der Höhe der Innen- und Außen-Umfangs-Abschnitte 20-I, 20-A. Dabei ist *n* die Anzahl der einzelnen Feldspulen 20 auf der Trägerscheibe 16' des Ständers 16.

In einer Variante, die nicht zur Erfindung gehört, der elektrischen Scheibenläufermaschine sind radial innerhalb der Innen-Umfangs-Abschnitte 20-I der einzelnen Feldspulen 20 des Ständers 16 Sensorspulen eines induktiven Winkelmessystems der Platine zugeordnet, auf/in/unter der die Feldspulen 20 angeordnet sind. Diese Sensorspulen des induktiven Winkelmessystems sind mit einer Steuerung verbunden. Der Trägerscheibe 14' des Läufers 14 sind mit den Sensorspulen zusammenwirkende (und durch den Luftspalt 18 getrennt) induktive Strukturen zugeordnet.

In Fig. 3 ist veranschaulicht, wie die Trägerscheibe 14' jedes Läufers 14 als Kreisring ausgebildet ist. In die Trägerscheibe 14' jedes Läufers 14 sind die Permanentmagnete →, ← zumindest teilweise eingebettet. Alernativ dazu könenn auch zumindest teilweise eingebettete, ein- oder mehrphasig ausgestaltete Leiterbahnzüge als Läufer-Feldspulen vorgesehen sein. Die Trägerscheibe 14' jedes Läufers 14 hat nahe dem Zentrum eine axiale Höhe, die höher ist als am äußeren Rand der Trägerscheibe. In die Trägerscheibe 14' jedes Läufers 14 sind die Permanentmagnete →, ← oder Läufer-Feldspulen zumindest teilweise so eingebettet sind, dass nahe dem Zentrum der Trägerscheibe die axiale Höhe des Kreisrings höher ist als am äußeren Rand der Trägerscheibe. Der Winkel W, den die obere und die untere Fläche der Trägerscheibe 14'des Läufers 14 einschließen, beträgt zwischen 3° und 30°. In Fig. 3 ist auf der linken Seite der Figur eine Variante gezeigt, bei der die Änderung der axialen Höhe in radialer Richtung konzentrisch stufenlos, während in Fig. 3 auf der rechten Seite der Figur eine Variante, die nicht zur Erfindung gehört, gezeigt ist, bei der die Änderung der axialen Höhe in radialer Richtung gestuft ist.

Der Läufer 14 hat eine Scheibe aus Stahl, die mit der Maschinenwelle 26 drehfest verbunden ist. Die Scheibe aus Stahl trägt an wenigstens einer ihrer beiden Seiten die Permanentmagnete →, ←, die vorzugsweise als Zylinder- oder Kegel-Ringsegmente gestaltet sind. Anstelle der Magnete können auch Läuferfeldspulen vorgesehen sein.

An der Scheibe des Läufers 14 beidseitig Permanentmagnete angeordnete und miteinander in axialer Richtung fluchtende Permanentmagneten haben jeweils gleiche oder gegensinnige magnetische Orientierung. In der in Fig. 3 veranschaulichten Variante , die nicht zur Erfindung gehört, sind an der Scheibe des Läufers 14 auf beiden Seiten gegensinnig orientierte Permanentmagnete angeordnet.

Die Scheibe 14' des Läufers 14 ist in einer Variante , die nicht zur Erfindung gehört, mit der Maschinenwelle einstückig gestaltet. Dabei sind die beidseitig angeordneten Permanentmagnete als dünne Magnetscheiben ausgestaltet, und die zum äußeren Rand hin abnehmende axiale Höhe der Trägerscheibe des Läufers 14 ist im Wesentlichen durch abnehmende Dicke der Scheibe des Läufers 14 bei im Wesentlichen gleicher Dicke der Permanentmagnete erreicht.

In den Fig. 1 und 3 ist veranschaulicht, dass die Scheibe des Läufers 14 am äußeren Umfang ein ringförmiges Gleitlager 14a aufweist. Dazu ist in den äußeren Rand der Scheibe eine Nut eingearbeitet, in die mehrere, am Umfang verteilte, gehäusefest montierte Gleitstücke 14b eingreifen.

In einer weiteren Variante , die nicht zur Erfindung gehört, sind die Trägerscheibe 16' des Ständers 16 sowie ferromagnetische Rückschlussteile 22 und ein Gehäuse in axialer Richtung (oder schräg zur Längsmittelachse der Scheibenläufermaschine) in zwei (oder mehr) Teile geteilt. Dabei sind die einzelnen Teile der Trägerscheibe 16' und der Rückschlussteile in jeweilige Gehäuseteile form- und/oder stoffschlüssig eingebracht.

In Fig. 1 ist weiter veranschaulicht, wie zwei Trägerscheiben des Ständers 16 eine Scheibe des Läufers 14 in axialer Richtung zwischen sich aufnehmen. Dabei sind die beiden Trägerscheiben des Ständers 16 zusammen mit ihrem jeweiligen ferromagnetischen Rückschluss 22 in axialer Richtung beweglich gelagert. Bei Betriebs-Bestromung der Ständerspulen werden die beiden Trägerscheiben des Ständers 16 an die Scheibe des Läufers 14 angezogen. In den ferromagnetischen Rückschlüssen 22 oder dem Gehäuse 36 der Scheibenläufermaschine ist zu beiden Seiten der Scheibe des Läufers 14 wenigstens eine Zug-/Haltespule 38 angeordnet. Wenn diese Zug-/Haltespulen 38 entsprechend bestromt werden, wirken sie zusammen mit den ferromagnetischen Rückschlüssen 22 oder dem Gehäuse 36 Zug-/Haltespulen 38 und den ferromagnetischen Rückschlüssen 22 oder dem Gehäuse 36 wie Hubmagnete und ziehen die beiden Trägerscheiben des Ständers 16 von der Scheibe des Läufers 14 auf Abstand und halten sie in dieser Position. Da die Maschine üblicherweise nur kurzzeitig in Betrieb ist, stellt der Betrieb der Hubmagnete keine übermäßige Belastung dar.

Die Permanentmagnete →, ← des Läufers 14 und die Spulen 20 des Ständers 16 sind gegeneinander durch eine Isolierschicht voneinander getrennt. Des Weiteren sind jede der Scheiben des Ständers 16, die ferromagnetischen Rückschlüsse 22 und die Scheibe des Läufers 14 so relativ zu einander in axialer Richtung gelagert und mit Anschlägen versehen, dass jede der Scheiben des Ständers 16 an dem entsprechenden der ferromagnetischen Rückschlüsse 22 im angezogenen Zustand anliegt, und jede der Scheiben des Ständers 16 gegenüber der Scheibe des Läufers 14 im Betrieb einen Luftspalt von etwa 0,1 mm bis etwa 0.3 mm einhält.

Als Permanentmagnete →, ← sind in die Trägerscheibe 14' jedes Läufers 14 oder jedes Ständers 16 eingebettete oder zumindest teilweise frei liegende Permanentmagnete →, ← vorgesehen sind, die in axialer Richtung etwa 0.5 bis 3-mal, vorzugsweise ein- bis zweimal so hoch wie der Luftspalt 18 sind. Die Permanentmagnete →, ← sind vorzugsweise Seiten-Erde-Magnete. In Varianten der hier gezeigten Maschine hat der Ständer 16 drei- oder höherphasig ausgestaltete Ständerspulen 20.

Ein Verfahren zur Herstellung einer elektrischen Scheibenläufermaschine hat die Schritte:
1.) Bereitstellen eines in axialer Richtung oder schräg zur Längsmittelachse der Scheibenläufermaschine in zwei oder mehr Teile geteilten
   -- Ständers,
   -- ferromagnetischen Rückschlusses, und
   -- Gehäuses;
2.) Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt;
3.) stoff- oder formschlüssiges Einfügen der Teile des Ständers und des ferromagnetischen Rückschlusses zumindest teilweise in ein jeweiliges Gehäuseteil;
4.) Zusammenfügen der Gehäuseteile mit den Teilen des Ständers und des Rückschlusses zu einem vollständigen Gehäuse zusammen mit einer Läuferanordnung, welche auch eine Maschinenwelle umfasst, wobei die Gehäuseteile und die Läuferanordnung zueinander passende Gleitlager für die Läuferanordnung aufweisen.

Eine Ausgestaltung des Verfahrens hat die Schritte:
1.) Bereitstellen einer in axialer Richtung oder schräg zur Längsmittelachse der Scheibenläufermaschine in zwei oder mehr Teile geteilten Läuferlagerscheibe mit einer Aufnahme für den Läufer;
2.) Einsetzen des Läufers in die Aufnahme;
3.) Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt.

In einer weiteren Variante des Verfahrens wird eine Läuferlagerscheibe mit einem Gehäuse verbunden, oder bildet die Läuferlagerscheibe wenigstens einen Abschnitt des Gehäuses.

## Patentansprüche

1. Elektrische Scheibenläufermaschine mit
- wenigstens einem Läufer (14) und wenigstens einem zu dem Läufer (14) zumindest teilweise korrespondierenden Ständer (16), wobei der wenigstens eine Läufer (14) und der wenigstens eine Ständer (16) jeweils eine einander zugewandte Stirnseite (14a, 14b; 16a, 16b) haben, wobei
- der wenigstens eine Läufer (14) Feldspulen oder Permanentmagnete (→, ←) trägt und der wenigstens eine Ständer (16) Feldspulen (20) trägt, zwischen jedem Läufer (14) und jedem Ständer (16) jeweils ein Luftspalt (18) ausgebildet ist, die Feldspulen (20) und/oder die Permanentmagnete (→, ←) derart ausgerichtet und an jedem Läufer (14) bzw. jedem Ständer (16) angeordnet sind, dass die Feldspulen (20) im stromdurchflossenen Zustand und/oder die Permanentmagnete (→, ←) zumindest zeitweilig gleich- oder gegensinnige Magnetfelder hervorrufen, die eine Dreh- oder Längs-Relativbewegung des Läufers (14) zum Ständer (16) bewirken,
- jeder Läufer (14) als Kreisring ausgebildet ist, und in jeden Läufer (14) die Permanentmagnete (→, ←) zumindest teilweise eingebettet sind, oder zumindest teilweise eingebettete, ein- oder mehrphasig ausgestaltete Leiterbahnzüge als Feldspulen vorgesehen sind,
- jeder Ständer (16) als Kreisring ausgebildet ist, dem zumindest ein Kreisabschnitt (KA) fehlt, und die Feldspulen (20) jedes Ständers (16) sich radial erstreckende Abschnitte sowie sich in Innen- und Außen-Umfangsrichtung erstreckende Abschnitte aufweisen,
**dadurch gekennzeichnet, dass**
die sich in Außen-Umfangsrichtung erstreckenden Abschnitte der Feldspulen (20) im Bereich des fehlenden Kreisabschnitts (KA) des Kreisrings einen höheren elektrischen Widerstand aufweisen als die sich in Außen-Umfangsrichtung erstreckenden Abschnitte der Feldspulen (20) im Bereich ohne fehlenden Kreisabschnitt (KA) des Kreisrings.

2. Elektrische Scheibenläufermaschine nach Anspruch 1, wobei
- die sich in Außen-Umfangsrichtung erstreckenden Abschnitte der Feldspulen (20) im Bereich ohne fehlenden Kreisabschnitt (KA) des Kreisrings als in axialer Richtung erhöhte Stirnverbinder gegenüber dem Bereich mit fehlendem Kreisabschnitt (KA) des Kreisrings ausgebildet sind, und/oder
- die sich in Außen-Umfangsrichtung erstreckenden Abschnitte der Feldspulen (20) im Bereich ohne fehlenden Kreisabschnitt des Kreisrings als mehrlagiges Leitermaterial gegenüber dem Bereich mit fehlendem Kreisabschnitt mit wenigerlagigem Leitermaterial ausgebildet sind, und/oder
wobei
- der Läufer einen Flugkreis-Durchmesser hat, mit dem Abstand (AS) einer Sehne des fehlenden Kreisabschnitts (KA) des Kreisrings vom Zentrum des Kreisrings (KS) des Ständers zumindest annähernd zusammenfällt, und/oder
wobei
- der Kreisring jedes Läufers (14) und/oder der Kreisring jedes Ständers (16) jeweils eine Polygonringform haben.

3. Elektrische Scheibenläufermaschine mit
- wenigstens einem Läufer (14) und wenigstens einem zu dem Läufer (14) zumindest teilweise korrespondierenden Ständer (16), wobei der wenigstens eine Läufer (14) und der wenigstens eine Ständer (16) jeweils eine einander zugewandte Stirnseite (14a, 14b; 16a, 16b) haben, wobei
- der wenigstens eine Läufer (14) eine Feldspule oder Permanentmagnete (→, ←) trägt und der wenigstens eine Ständer (16) Feldspulen (20) trägt, zwischen jedem Läufer (14) und jedem Ständer (16) jeweils ein Luftspalt (18) ausgebildet ist, die Feldspulen (20) und/oder die Permanentmagnete (→, ←) derart ausgerichtet und an jedem Läufer (14) bzw. jedem Ständer (16) angeordnet sind, dass die Feldspulen (20) im stromdurchflossenen Zustand und/oder die Permanentmagnete (→, ←) zumindest zeitweilig gleich- oder gegensinnige Magnetfelder hervorrufen, die eine Dreh- oder Längs-Relativbewegung des Läufers (14) zum Ständer (16) bewirken,
- jeder Läufer (14) als Kreisring ausgebildet ist, und in jeden Läufer (14) die Permanentmagnete (→, ←) zumindest teilweise eingebettet sind, oder zumindest teilweise eingebettete, ein- oder mehrphasig ausgestaltete Leiterbahnzüge als Feldspulen vorgesehen sind, wobei
- mehrere einphasige Feldspulen des Ständers entlang des Umfangs einer Trägerscheibe des Ständers versetzt zueinander angeordnet sind,
- die Feldspulen (20) jedes Ständers (16) sich radial ersteckende Abschnitte sowie sich in Innen- und Außen-Umfangsrichtung erstreckende Abschnitte aufweisen, und
- die sich in Außen-Umfangsrichtung erstreckenden Abschnitte der mehreren einphasigen Feldspulen (20) überkreuzungsfrei zueinander angeordnet sind, **dadurch gekennzeichnet, dass** die sich radial erstreckenden Abschnitte in axialer Richtung etwa ein *n*-tel der Höhe der sich in Innen- und Außen-Umfangsrichtung erstreckenden Abschnitte aufweisen, wobei *n* die Anzahl der einphasigen Feldspulen (20) auf der Trägerscheibe des Ständers (16) ist.

4. Elektrische Scheibenläufermaschine nach Anspruch 3, wobei
- die Feldspulen des Ständers als eine Y- oder Δ-verschaltete Anordnung betrieben, oder einzeln gespeist sind, wobei sich durch die räumliche Anordnung der Feldspulen zu den Permanentmagneten (→, ←) des Läufers die Phasenzugehörigkeit bestimmt.

5. Elektrische Scheibenläufermaschine nach Anspruch 3 oder nach Anspruch 4, wobei
die sich radial erstreckenden Abschnitte der Feldspulen (20) jedes Ständers (16) gerade verlaufen bis zu einem Bereich der sich in Außen-Umfangsrichtung erstreckenden Abschnitte.

6. Elektrische Scheibenläufermaschine nach einem der Ansprüche 3 bis 5, wobei
als Stirnverbinder ein Leiterabschnitt an einer äußeren Mantelfläche der Trägerscheibe des Ständers (16) angeordnet ist.

7. Elektrische Scheibenläufermaschine nach einem der Ansprüche 3 bis 6, wobei
aufeinander folgende sich radial erstreckende Abschnitte der Feldspulen (20) des Ständers (16) auf zwei in axialer Richtung benachbarte Trägerscheiben des Ständers (16) verteilt sind, und wobei
- Leiter an jeweiligen Mantelflächen der benachbarten Trägerscheibe des Ständers (16) die sich radial erstreckenden Abschnitte der Feldspulen (20) jedes Ständers (16) kontaktieren.

8. Elektrische Scheibenläufermaschine nach einem der Ansprüche 3 bis 7, wobei
- die Feldspulen (20) des Ständers (16) aus mehreren einzelnen Platinen gebildet sind, die beidseitig aluminium- oder kupferhaltige Schichten aufweisen, wobei
- zwischen zwei aluminium- oder kupferhaltigen Schichten benachbarter Platinen eine Lotschicht, eine Sinterschicht oder Aluminium- oder Kupferfolie angeordnet ist.

9. Elektrische Scheibenläufermaschine nach einem der Ansprüche 3 bis 8, wobei
als Stirnverbinder an einem inneren Rand des Ständers (16) zwei Leiter etwa gleich lang und ein dritter Leiter zwischen den beiden etwa gleich langen Leitern angeordnet ist und diese radial überragt,
- als Stirnverbinder bei dem einen der beiden etwa gleich langen Leiter eine Querverbindung an der einen Seite, und bei dem anderen der beiden etwa gleich langen Leiter eine Querverbindung an der anderen Seite der Leiteroberfläche angeordnet ist,
- der dritte Leiter radial innenliegend an beiden Seiten jeweils eine Querverbindung aufweist, und
- die drei Leiter mit ihren Querverbindungen elektrisch kontaktiert sind.

10. Elektrische Scheibenläufermaschine nach dem vorhergehenden Anspruch, wobei
- die drei Leiter und ihre Querverbindungen hinsichtlich ihrer Abmessungen und Querschnitte so dimensioniert sind, dass die elektrischen Widerstände der jeweiligen Feldspulen (20) des Ständers (16) zumindest annähernd übereinstimmen.

11. Elektrische Scheibenläufermaschine nach dem Anspruch 9 oder nach dem Anspruch 10, wobei
- die drei Leiter und ihre Querverbindungen mittels Reihen oder Feldern von Durchkontaktierungen nach Art offener oder gedeckelter thermal Vias miteinander verbunden sind.

12. Verfahren zur Herstellung einer elektrischen Scheibenläufermaschine nach einem der Ansprüche 1 oder 3, mit den Schritten:
- Bereitstellen eines in axialer Richtung oder schräg zur Längsmittelachse der Scheibenläufermaschine in zwei oder mehr Teile geteilten
- Ständers,
- ferromagnetischen Rückschlusses, und
- Gehäuses;
- Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt;
- stoff- oder formschlüssiges Einfügen der Teile des Ständers und des ferromagnetischen Rückschlusses zumindest teilweise in ein jeweiliges Gehäuseteil;
- Zusammenfügen der Gehäuseteile mit den Teilen des Ständers und des Rückschlusses zu einem vollständigen Gehäuse zusammen mit einer Läuferanordnung, welche auch eine Maschinenwelle umfasst, wobei die Gehäuseteile und die Läuferanordnung zueinander passende Gleitlager für die Läuferanordnung aufweisen.

13. Verfahren zur Herstellung einer elektrischen Scheibenläufermaschine nach Anspruch 12, mit den Schritten:
- Bereitstellen einer in axialer Richtung oder schräg zur Längsmittelachse der Scheibenläufermaschine in zwei oder mehr Teile geteilten Läuferlagerscheibe mit einer Aufnahme für den Läufer;
- Einsetzen des Läufers in die Aufnahme;
- Einsetzen der Teile des Ständers und des ferromagnetischen Rückschlusses in eine Lehre, welche die Winkelorientierung dieser Teile zu, und den axialen Abstand dieser Teile voneinander entlang der Mittellängsachse der herzustellenden Scheibenläufermaschine festlegt.

14. Verfahren zur Herstellung einer elektrischen Scheibenläufermaschine nach einem der Ansprüche 12 oder 13, wobei die Läuferlagerscheibe mit einem Gehäuse verbunden wird, oder wenigstens einen Abschnitt des Gehäuses zumindest teilweise bildet.

## Claims

1. An electric disc-type rotor machine comprising
- at least one rotor (14) and at least one stator (16) at least partially corresponding to said rotor (14), said at least one rotor (14) and said at least one stator (16) each having a mutually facing end face (14a, 14b; 16a, 16b), wherein
- the at least one rotor (14) carries field coils or permanent magnets (→ ,←) and the at least one stator (16) carries field coils (20), an air gap (18) is formed between each rotor (14) and each stator (16), the field coils (20) and/or the permanent magnets (→ ,← ) are aligned and arranged on each rotor (14) or each stator (16) in such a way that the field coils (20) in the current-carrying state and/or the permanent magnets (→ ,←) are at least temporarily magnetised in the same or opposite direction in such a way that the field coils (20) in the current-carrying state and/or the permanent magnets (→ ,←) at least temporarily produce magnetic fields in the same or opposite directions, which cause a rotary or relative movement of the rotor (14) with respect to the stator (16),
- each rotor (14) is formed as a circular ring, and the permanent magnets (→ ,←) are at least partially embedded in each rotor (14) or single-phase or multi-phase conductor tracks are provided as field coils,
- each stator (16) is formed as a circular ring lacking at least one circular section (KA), and the field coils (20) of each stator (16) have radially extending portions and portions extending in the inner and outer circumferential directions,
**characterised in that**
the sections of the field coils (20) extending in the outer circumferential direction in the region of the lacking circular section (KA) of the circular ring have a higher electrical resistance than the sections of the field coils (20) extending in the outer circumferential direction in the region without the lacking circular section (KA) of the circular ring.

2. The electric disc rotor machine according to claim 1, wherein
- the sections of the field coils (20) extending in the outer circumferential direction in the region without a lacking circular section (KA) of the circular ring are formed as end connectors raised in the axial direction relative to the region with a lacking circular section (KA) of the circular ring, and/or
wherein
- the sections of the field coils (20) extending in the outer circumferential direction in the region without a lacking circular section of the circular ring are formed as multilayer conductor material with respect to the region with a missing circular section with less layer conductor material, and/or
where
- the rotor has a flight circle diameter at least approximately coinciding with the distance (AS) of a chord of the missing circular portion (KA) of the circular ring from the centre of the circular ring (KS) of the stator, and/or
where
- the circular ring of each rotor (14) and/or the circular ring of each stator (16) each have a polygon ring shape.

3. The electric disc-type rotor machine comprising
- at least one rotor (14) and at least one stator (16) at least partially corresponding to
said rotor (14), said at least one rotor (14) and said at least one stator (16) each having a mutually facing end face (14a, 14b; 16a, 16b), wherein
- the at least one rotor (14) carries a field coil or permanent magnets (→ ,←) and the at least one stator (16) carries field coils (20), an air gap (18) is formed between each rotor (14) and each stator (16), the field coils (20) and/or the permanent magnets (→ ,←) are aligned and arranged on each rotor (14) or each stator (16) in such a way that the field coils (20) in the current-carrying state and/or the permanent magnets (→ ,←) are at least temporarily in the same or opposite direction in such a way that the field coils (20) in the current-carrying state and/or the permanent magnets (→ ,←) at least temporarily produce magnetic fields in the same or opposite directions, which cause a rotary or relative movement of the rotor (14) with respect to the stator (16),
- each rotor (14) is designed as a circular ring, and the permanent magnets (→ ,←) are at least partially embedded in each rotor (14), or single-phase or multi-phase conductor tracks are provided as field coils, wherein
- a plurality of single-phase field coils of the stator are arranged offset from one another along the circumference of the support disc of the stator,
- the
field coils (20) of each stator (16) have radially extending sections and sections extending in the inner and outer circumferential direction, and
- the sections of the several individual phases of the field coils (20) extending in the outer circumferential direction are arranged without crossing each other, **characterised in that**
the radially extending portions in the axial direction are about one *nth of the* height of the portions extending in the inner and outer circumferential directions, where *n* is the number of field coils (20) on the support disc of the stator (16).

4. Electric disc rotor machine according to claim 3, wherein
- the field coils of the stator are operated as a Y- or Δ-connected arrangement, or are fed individually, wherein the phase association is determined by the spatial arrangement of the field coils to the permanent magnets (→ ,←) of the rotor.

5. The electric disc machine according to claim 3 or according to claim 4, wherein
the radially extending portions of the field coils (20) of each stator (16) are straight up to a region of the portions extending in the outer circumferential direction.

6. The electric disc machine according to any one of claims 3 to 5, wherein
a conductor section is arranged as an end connector on an outer circumferential surface of the support disc of the stator (16).

7. The electric disc rotor machine according to any one of claims 3 to 6, wherein
successive radially extending portions of the field coils (20) of the stator (16) are distributed on two axially adjacent support discs of the stator (16), and wherein-conductors on respective circumferential surfaces of the adjacent support disc of the stator (16) contact the radially extending portions of the field coils (20) of each stator (16).

8. The electric disc rotor machine according to any one of claims 3 to 7, whereinthe field coils (20) of the stator (16) are formed from a plurality of individual plates which have aluminium- or copper-containing layers on both sides, wherein
- a solder layer, a sintered layer or aluminium or copper foil is arranged between two aluminium- or copper-containing layers of adjacent blanks.

9. The electric disc rotor machine according to one of claims 3 to 8, wherein
two conductors of approximately equal length are arranged as end connectors on an inner edge of the stator (16) and a third conductor is arranged between the two conductors of approximately equal length and projects radially beyond them,
- a cross-connection is arranged as an end connector on one side of the conductor - surface for one of the two conductors of approximately equal length, and a cross-connection is arranged on the other side of the conductor surface for the other of the two conductors of approximately equal length,
- the third conductor has a cross-connection radially inside on both sides, and
- the three conductors are electrically contacted with their cross-connections.

10. The electric disc rotor machine according to the preceding claim, wherein
- the three conductors and their cross-connections are dimensioned with respect to their dimensions and cross-sections in such a way that the electrical resistances of the respective field coils (20) of the stator (16) at least approximately match.

11. The electric disc rotor machine according to claim 9 or according to claim 10, wherein
- the three conductors and their cross-connections are interconnected by means of rows or arrays of vias of the open or capped thermal vias type.

12. A method of manufacturing an electric disc rotor machine according to any one of claims 1 or 3, comprising the steps of:
- providing a
-- stator
-- ferromagnetic back, and
-- housing,
divided into two or more parts in the axial direction or obliquely to the longitudinal centre axis of the disc rotor machine;
- inserting the parts of the stator and of the ferromagnetic back into a jig which - determines the angular orientation of these parts to, and the axial distance of these parts from, each other along the central longitudinal axis of the disc-type machine to be produced;
- material-locking or form-fitting insertion of the parts of the stator and of the ferromagnetic return at least partially into a respective housing part;
- assembly of the housing parts with the parts of the stator and the return to form a complete housing together with a rotor assembly which also comprises a machine shaft, the housing parts and the rotor assembly having matching sliding bearings for the rotor assembly.

13. The method of manufacturing an electric disc rotor machine according to claim 12, comprising the steps:
- providing a rotor bearing disc divided into two or more parts in the axial direction or obliquely to the longitudinal centre axis of the disc rotor machine with a receptacle for the rotor;
- inserting the slider into the receptacle;
- inserting the parts of the stator and the ferromagnetic return into a jig which - determines the angular orientation of these parts to, and the axial distance of these parts from each other along the central longitudinal axis of the disc machine to be manufactured.

14. The method of manufacturing an electric disc rotor machine according to any one of claims 12 or 13, wherein the rotor bearing disc is connected to a housing, or at least partially forms a portion of the housing.

## Revendications

1. Une machine électrique à rotor en disque comprenant
- au moins un rotor (14) et au moins un stator (16) correspondant au moins - partiellement au rotor (14), le au moins un rotor (14) et le au moins un stator (16) ayant chacun une face frontale (14a, 14b ; 16a, 16b) tournée l'une vers l'autre, dans laquelle
- l'au moins un rotor (14) porte des bobines de champ ou des aimants permanents (→ ,← ) et l'au moins un stator (16) porte des bobines de champ (20), un entrefer (18) est formé entre chaque rotor (14) et chaque stator (16), les bobines de champ (20) et/ou les aimants permanents (→ ,←) sont orientés et montés sur chaque rotor (14) ou sur chaque stator (16) de telle manière que chaque stator (16), que les bobines de champ (20) à l'état parcouru par le courant et/ou les aimants permanents (→ ,←) provoquent au moins temporairement des champs magnétiques de même sens ou de sens opposés, qui provoquent un mouvement de rotation ou un mouvement relatif du rotor (14) par rapport au stator (16),
- chaque rotor (14) est réalisé sous la forme d'un anneau circulaire, et les aimants permanents (→ ,←) sont au moins partiellement noyés dans chaque rotor (14), ou des trains de pistes conductrices au moins partiellement noyés et réalisés en une ou plusieurs phases sont prévus comme bobines de champ,
- chaque stator (16) est formé comme un anneau circulaire auquel il manque au moins une section circulaire (KA), et les bobines de champ (20) de chaque stator (16) ont des sections s'étendant radialement et des sections s'étendant dans les directions circonférentielles intérieure et extérieure,
**caractérisé en ce que**
les sections des bobines de champ (20) s'étendant dans la direction circonférentielle extérieure dans la zone de la section circulaire manquante (KA) de l'anneau circulaire présentent une résistance électrique plus élevée que les sections des bobines de champ (20) s'étendant dans la direction circonférentielle extérieure dans la zone sans section circulaire manquante (KA) de l'anneau circulaire.

2. La machine électrique à rotor en disque selon la revendication 1, dans laquelle
- les sections des bobines de champ (20) s'étendant dans la direction périphérique extérieure sont réalisées dans la zone sans section circulaire manquante (KA) de l'anneau circulaire en tant que connecteurs frontaux surélevés dans la direction axiale par rapport à la zone avec section circulaire manquante (KA) de l'anneau circulaire, et/ou
dans lequel
- les sections des bobines de champ (20) s'étendant dans la direction périphérique extérieure sont réalisées dans la zone sans section circulaire manquante de l'anneau circulaire en tant que matériau conducteur multicouche par rapport à la zone avec section circulaire manquante avec un matériau conducteur à moins de couches, et/ou
- les sections des bobines de champ (20) s'étendant dans la direction périphérique extérieure sont réalisées dans la zone avec section circulaire manquante avec un matériau conducteur à plus de couches, et/où
- le rotor a un diamètre de cercle de vol qui coïncide au moins approximativement avec la distance (AS) d'une corde de la section circulaire manquante (KA) de l'anneau circulaire par rapport au centre de l'anneau circulaire (KS) du stator, et/ou
- l'anneau circulaire de chaque rotor (14) et/ou l'anneau circulaire de chaque stator (16) ont chacun une forme d'anneau polygonal.

3. La machine électrique à rotor en disque avec
- au moins un rotor (14) et au moins un stator (16) correspondant au moins partiellement au
rotor (14), le au moins un rotor (14) et le au moins un stator (16) ayant chacun un côté frontal (14a, 14b ; 16a, 16b) tourné l'un vers l'autre, où
- l'au moins un rotor (14) porte une bobine de champ ou des aimants permanents (→ ,←) et l'au moins un stator (16) porte des bobines de champ (20), un entrefer (18) est formé entre chaque rotor (14) et chaque stator (16), les bobines de champ (20) et/ou les aimants permanents (→ ,←) sont orientés et montés sur chaque rotor (14) ou sur chaque stator (16) de telle manière que chaque stator (16), que les bobines de champ (20) à l'état parcouru par le courant et/ou les aimants permanents (→ ,←) provoquent au moins temporairement des champs magnétiques de même sens ou de sens opposés, qui provoquent un mouvement de rotation ou un mouvement relatif du rotor (14) par rapport au stator (16),
- chaque rotor (14) est réalisé sous la forme d'un anneau circulaire, et les aimants permanents (→ ,←) sont au moins partiellement noyés dans chaque rotor (14), ou bien il est prévu comme bobines de champ des pistes conductrices au moins partiellement noyées et réalisées en une ou plusieurs phases, dans lequel
- plusieurs bobines de champ monophasées du stator sont disposées de manière décalée les unes par rapport aux autres le long de la périphérie du disque de support du stator,
- les bobines de champ (20) de chaque stator (16) présentent des sections s'étendant radialement ainsi que des sections s'étendant dans la direction périphérique intérieure et extérieure, et
- les sections s'étendant dans la direction circonférentielle extérieure de la pluralité de phases individuelles des bobines de champ (20) sont disposées sans croisement les unes par rapport aux autres,
**caractérisé en ce que**
les parties s'étendant radialement dans la direction axiale ont environ un *n-ième* de la hauteur des parties s'étendant dans les directions circonférentielles intérieure et extérieure, où
*n* est le nombre de bobines de champ (20) sur le disque de support du stator (16).

4. La machine électrique à rotor en disque selon la revendication 3, dans laquelle
- les bobines de champ du stator fonctionnent comme un agencement connecté en Y ou en Δ, ou sont alimentées individuellement, l'appartenance de phase étant déterminée par la disposition spatiale des bobines de champ par rapport aux aimants permanents (→ ,←) du rotor.

5. La machine électrique à rotor en forme de disque selon la revendication 3 ou la revendication 4, dans laquelle
les parties s'étendant radialement des bobines de champ (20) de chaque stator (16) sont droites jusqu'à une zone des parties s'étendant dans la direction circonférentielle extérieure.

6. La machine électrique à rotor en forme de disque selon l'une quelconque des revendications 3 à 5, dans laquelle
comme connecteur d'extrémité, une section de conducteur est disposée sur une surface d'enveloppe extérieure du disque de support du stator (16).

7. La machine électrique à rotor en forme de disque selon l'une quelconque des revendications 3 à 6, dans laquelle
des sections successives s'étendant radialement des bobines de champ (20) du stator (16) sont réparties sur deux disques de support du stator (16) adjacents dans la direction axiale, et dans lequel-
des conducteurs sur des surfaces d'enveloppe respectives du disque de support adjacent du stator (16) sont en contact avec les sections s'étendant radialement des bobines de champ (20) de chaque stator (16).

8. La machine électrique à rotor en disque selon l'une des revendications 3 à 7, dans laquelle
- les bobines de champ (20) du stator (16) sont formées de plusieurs platines individuelles qui présentent des couches contenant de l'aluminium ou du cuivre sur les deux faces, dans laquelle
- une couche de soudure, une couche de frittage ou une feuille d'aluminium ou de cuivre est disposée entre deux couches contenant de l'aluminium ou du cuivre de platines voisines.

9. La machine électrique à rotor en disque selon l'une des revendications 3 à 8, dans laquelle
deux conducteurs de longueur à peu près égale sont disposés comme connecteurs frontaux sur un bord intérieur du stator (16) et un troisième conducteur est disposé entre les deux conducteurs de longueur à peu près égale et dépasse radialement de ceux-ci,
- en tant que connecteur frontal, une liaison transversale est disposée sur un côté de la surface du conducteur pour l'un des deux conducteurs de longueur à peu près égale, et une liaison transversale est disposée sur l'autre côté de la surface du conducteur pour l'autre des deux conducteurs de longueur à peu près égale,
- le troisième conducteur présente radialement à l'intérieur des deux côtés respectivement une connexion transversale, et
- les trois conducteurs sont en contact électrique avec leurs connexions transversales.

10. La machine électrique à rotor en disque selon la revendication précédente, dans laquelle
- les trois conducteurs et leurs connexions transversales sont dimensionnés en ce qui concerne leurs dimensions et leurs sections transversales de telle sorte que les résistances électriques des bobines de champ respectives (20) du stator (16) coïncident au moins approximativement.

11. La machine électrique à rotor en disque selon la revendication 9 ou selon la revendication 10, dans laquelle :
- les trois conducteurs et leurs connexions transversales sont interconnectés au moyen de rangées ou de réseaux de trous d'interconnexion du type vias thermiques ouverts ou fermés.

12. Procédé de fabrication d'une machine électrique à rotor en disque selon l'une des revendications 1 ou 3, comprenant les étapes consistant à:
- fournir un
-- stator,
-- un circuit de fermeture ferromagnétique, et
-- un boîtier
divisé en deux ou plusieurs parties dans la direction axiale ou oblique par rapport à l'axe central longitudinal de la machine à rotor en disque;
- l'insertion des parties du stator et de la culasse ferromagnétique dans un gabarit qui détermine l'orientation angulaire de ces parties par rapport à, et la distance axiale de ces parties l'une par rapport à l'autre le long de l'axe longitudinal central de la machine à rotor à disque à fabriquer ;
- l'insertion par matière ou par forme des parties du stator et de la culasse ferromagnétique au moins partiellement dans une partie respective du boîtier ; - assemblage des parties du boîtier avec les parties du stator et du circuit de retour pour former un boîtier complet avec un ensemble de rotor, qui comprend également un arbre de machine, les parties du boîtier et l'ensemble de rotor présentant des paliers lisses adaptés les uns aux autres pour l'ensemble de rotor.

13. Procédé de fabrication d'une machine électrique à rotor en disque selon la revendication 12, comprenant les étapes:
- Fournir un disque de support de rotor divisé en deux ou plusieurs parties dans la direction axiale ou oblique par rapport à l'axe central longitudinal de la machine à rotor à disque, avec un logement pour le rotor ;
- insertion du curseur dans le logement ;
- insertion des pièces du stator et du circuit ferromagnétique dans un gabarit qui détermine l'orientation angulaire de ces pièces par rapport à, et la distance axiale de ces pièces les unes par rapport aux autres le long de l'axe longitudinal central de la machine à rotor à disque à fabriquer.

14. Procédé de fabrication d'une machine électrique à rotor à disque selon l'une des revendications 12 ou 13, dans lequel le disque de support du rotor est relié à un boîtier ou forme au moins partiellement une partie du boîtier.
